Europäisches Patentamt

European Patent Office

Office européen des brevets

(11) Numéro de publication: **0 297 999**
**A2**

# (12) DEMANDE DE BREVET EUROPEEN

(21) Numéro de dépôt: **88420200.3**

(22) Date de dépôt: **15.06.88**

(51) Int. Cl.⁴: **C 09 D 5/02**

(30) Priorité: **17.06.87 FR 8708893**

(43) Date de publication de la demande:
**04.01.89 Bulletin 89/01**

(84) Etats contractants désignés:
**AT BE CH DE ES FR GB GR IT LI LU NL SE**

(71) Demandeur: **INDUSTRIES DES PEINTURES ASSOCIEES (I.P.A.)**
**2, rue Jean Jaurès**
**F-90300 Valdoie (FR)**

(72) Inventeur: **Moltenis, Jean**
**46, bis rue du Bosmont**
**F-90400 Danjoutin (FR)**

(74) Mandataire: **Maureau, Philippe et al**
**Cabinet Germain & Maureau Le Britannia - Tour C 20, bld**
**Eugène Déruelle Boîte Postale 3011**
**F-69392 Lyon Cédex 03 (FR)**

(54) Liant permettant l'obtention d'une peinture homogène, de faible densité, présentant un excellent pouvoir couvrant humide et à sec.

(57) Ces liants sont essentiellement constitués d'une émulsion vraie réalisée à partir d'au moins une phase aqueuse et d'au moins une phase huile diluable à volonté soit avec de l'eau, soit avec un solvant non polaire. Les peintures obtenues diluables à l'eau et au solvant sont pratiquement sans odeur et présentent un excellent pouvoir couvrant humide avec un très faible extrait sec.

EP 0 297 999 A2

**Description**

## LIANT PERMETTANT L'OBTENTION D'UNE PEINTURE HOMOGENE, DE FAIBLE DENSITE, PRESENTANT UN EXCELLENT POUVOIR COUVRANT HUMIDE ET A SEC

La présente invention concerne un liant permettant l'obtention d'une peinture homogène, de faible densité, présentant un excellent pouvoir couvrant humide et à sec.

Les liants sont les composants les plus importants de la formulation des peintures ; ce sont eux qui, en effet, assurent à la fois la cohésion de l'ensemble des constituants de cette peinture, l'adhésion au support et l'aspect du film sec.

Dans le cas de liants à base aqueuse, il s'agit le plus souvent de dispersions aqueuses de très fines particules de polymères, copolymères ou terpolymères totalement insolubles dans l'eau.

Dans le cas de liants à base de solvants non polaires, ou d'huiles, on utilise des polymères solubles dans les solvants ou huiles considérés.

Il faut toutefois noter que les peintures réalisées à partir de ces liants ne présentent pas une homogénéité parfaite et qu'il est le plus souvent nécessaire de les soumettre à une certaine agitation mécanique avant de les appliquer.

Il est, d'autre part, indispensable d'y adjoindre, afin notamment d'accroître leur pouvoir couvrant, et spécialement leur pouvoir couvrant humide, une quantité relativement importante de pigmentss, ce qui grève le prix de revient et constitue un facteur d'alourdissement des peintures.

La présente invention s'est donné pour objet de proposer de nouveaux liants pour peinture présentant à la fois une parfaite stabilité au stockage, qui permet leur emploi sans aucune agitation préalable, un excellent pouvoir couvrant et une densité nettement inférieure à celle des peintures classiques.

Les liants selon l'invention sont caractérisés en ce qu'ils sont essentiellement constitués d'une émulsion vraie réalisée à partir d'une dispersion d'un produit filmogène en phase aqueuse et/ou en phase huile diluable à volonté soit avec de l'eau, soit avec un solvant non polaire.

Les peintures dérivées du liant selon l'invention se caractérisent par une faible densité, très proches de 1,00, et une parfaite homogénéité permanente ; il n'est plus nécessaire de les agiter avant l'application, puisqu'elles ne présentent pas de phénomène de sédimentation et/ou de séparation de phases de stockage. Le pouvoir couvrant, tant humide qu'à sec, est, par ailleurs, tout à fait remarquable, sans qu'il soit nécessaire de recourir, comme c'est le cas dans la majorité des peintures actuelles, à l'addition de quantités très importantes de pigments pour assurer ce pouvoir couvrant humide et à sec.

Les peintures obtenues à partir du liant selon l'invention sont donc plus économiques, notamment dans le cas des peintures commercialisées au litre.

L'avantage économique se retrouve également au moment du transport de ces peintures qui sont nettement plus légères que les peintures ordinaires, puisque leur densité est très proche de 1,00.

Il reste, bien entendu, toujours possible de rajouter aux peintures obtenues à partir du liant selon l'invention une certaine quantité de charges ou de pigments, notamment pour leur communiquer des caractéristiques de blancheur ou de coloration spécifique.

Par ailleurs, l'addition de produits émulsifiants dans le liant reste toujours possible, mais elle n'est pas indispensable pour la réalisation des liants en émulsion selon l'invention, qui peuvent être préparés, de façon tout à fait satisfaisante, par simple agitation mécanique dans tout dispositif adapté à cet effet.

Les peintures obtenues à partir des liants selon l'invention sont, selon le choix des matières premières, véritablement sans odeur : en particulier on n'y décèle pas les odeurs déplaisantes d'ammoniac ou de monomères résiduels, d'oxydation d'huiles siccatives.

Le liant selon l'invention est constitué d'une émulsion, directe et/ou inverse, de deux phases non miscibles.

L'une des phases est une phase aqueuse et l'autre phase est une phase huile.

La phase aqueuse est constituée d'une ou plusieurs solutions aqueuses renfermant éventuellement une dispersion de composés polymères.

La phase huile est constituée d'une solution d'un ou de plusieurs composés huileux dans un solvant non polaire, éventuellement additionnés d'un produit filmogène.

Le liant selon l'invention est caractérisé en ce qu'il renferme :
- entre 2 et 98 % de phase aqueuse,
- entre 98 et 2 % de phase huile.

La phase aqueuse renferme entre 2 et 98 % d'une dispersion de composés polymères.

La phase huile est constituée d'une solution renfermant 2 à 98 % de produit filmogène dans un solvant non polaire.

Selon un autre mode de réalisation de l'invention, la phase huile est entièrement constituée d'un produit filmogène.

La présente invention sera mieux comprise d'ailleurs et ses avantages ressortiront bien de la description qui suit de deux exemples de liants explicitant l'invention sans nullement la limiter.

### Exemple 1 : Liant en émulsion type huile dans eau

On réalise, à partir de tout moyen classique d'émulsification, une émulsion à partir des éléments suivants :

|  | (en %) |
|---|---|
| Eau | 74,6 |
| Ammoniaque | 0,6 |
| Epaississant acrylique gonflable en milieu alcalin tel que celui commercialisé par Rohm et Haas sous la marque PRIMAL TT935 | 3,1 |
| Dispersion aqueuse de copolymère styrène-acrylique tel que celle commercialisée par TEXACO sous la marque DILEXO AS 2K | 6,2 |
| Solution à 70 % dans le White-Spirit d'une résine glycérophtalique telle que celle commercialisée par TEXACO sous la marque RHENALYD SF 68 | 15,5. |

On obtient une émulsion à phase continue aqueuse.

La taille moyenne des particules émulsionnées est de 2 à 3 microns, avec quelques particules pouvant atteindre 35 microns.

A partir de la formule ci-avant, on peut réaliser une peinture ayant la composition suivante :

|  | (en %) |
|---|---|
| Eau | 48,5 |
| Ammoniaque | 0,4 |
| Primal TT 935 | 2,0 |
| Dilexo AS2K | 4,0 |
| Rhénalyd SF 78 | 10,1 |
| Pigment à base de carbonate de calcium | 25,0 |
| Oxyde de titane rutile micronisé | 10. |

On obtient une peinture mate, diluable à l'eau présentant un excellent pouvoir couvrant, humide et à sec, ainsi qu'une absence complète de sédimentation au stockage.

Par ailleurs, l'extrait sec de cette peinture est de 44,7 % alors que pour les peintures mates classiques, il se situe entre 60 et 70 %.

Les caractéristiques de la peinture sont les suivantes :
- Concentration pigmentaire volumique    57 %
- Densité    1,3

**0 297 999**

## Exemple 2 : Liant en émulsion eau dans huile

On réalise, à partir de tout moyen classique d'émulsification, une émulsion à partir des éléments suivants :

|  | (en %) |
|---|---|
| Solution à 70 % dans le White-Spirit d'une résine glycérophtalique telle que celle commercialisée par TEXACO sous la marque RHENALYD SF 68 | 70,9 |
| - Siccatifs en prémélange : | 3,1 |
| White-Spirit à 17 % d'aromatiques | 10,0 |
| Dispersion aqueuse de copolymère styrène-acrylique telle que celle commercialisée par TEXACO sous la marque DILEXO AS 2K | 14,0 |
| Eau | 0,5 |

On obtient une émulsion à phase continue huile.

La taille moyenne des particules de la phase aqueuse dispersée est de 1 micron avec quelques particules pouvant atteindre 10 microns.

A partir de la formule ci-avant, on peut réaliser une peinture satinée ayant la composition suivante :

|  | (en %) |
|---|---|
| RHENALYD SF 68 | 45,1 |
| Siccatifs en prémélange | 2,0 |
| White-Spirit à 17 % aromatiques | 6,4 |
| DILEXO AS 2K | 8,9 |
| Eau | 0,3 |
| Lécithine de soja | 0,3 |
| Pigment à base de carbonate de calcium | 18,0 |
| Oxyde de titane rutile micronisé | 18,0. |

On obtient une peinture satinée, diluable au White-Spirit et/ou à l'eau, présentant un excellent pouvoir couvrant, humide et sec, ainsi qu'une absence complète de sédimentation au stockage.

Les caractéristiques de la peinture sont les suivantes :

Concentration pigmentaire volumique    24,3 %

Densité    1,30.

4

**Revendications**

1- Liants pour peinture, caractérisés en ce qu'ils sont essentiellement constitués d'une émulsion vraie réalisée à partir d'au moins une phase aqueuse et d'au moins une phase huile diluable à volonté soit avec de l'eau, soit avec un solvant non polaire.

2- Liants pour peinture selon la revendication 1, caractérisés en ce qu'ils sont constitués d'une émulsion de type huile dans eau.

3- Liants pour peinture selon la revendication 1, caractérisés en ce qu'ils sont constitués d'une émulsion type eau dans huile.

4- Liants pour peinture selon l'une des revendications 1 à 3, caractérisés en ce que la phase aqueuse renferme une dispersion de composés polymères.

5- Liants pour peinture selon l'une des revendications 1 à 3, caractérisés en ce que la phase huile est constituée d'une solution d'un ou plusieurs composés huileux dans un solvant non polaire.

6- Liants pour peinture selon la revendication 5, caractérisés en ce que la phase huile renferme un produit filmogène.

7- Liants pour peinture selon la revendication 5, caractérisés en ce que la phase huile est essentiellement constituée d'un produit filmogène.

8- Liants pour peinture selon l'une quelconque des revendications précédentes, caractérisés en ce qu'ils renferment :
   - entre 2 et 98 % de phase aqueuse,
   - entre 98 et 2 % de phase huile.

9- Liants pour peinture selon la revendication 8, caractérisés en ce que la phase aqueuse renferme entre 2 et 98 % d'une dispersion de composés polymères.

10- Liants pour peinture selon la revendication 8, caractérisés en ce que la phase huile est une solution renfermant entre 2 à 98 % de produit filmogène.

11- Peintures diluables à l'eau et/ou au solvant, de densité voisine de 1,0, sans odeur, réalisables à partir des liants selon l'une des revendications précédentes.

12- Peintures présentant un excellent pouvoir couvrant humide avec un très faible extrait sec, réalisées à partir des liants selon l'une des revendications précédentes.